# EUROPÄISCHE PATENTSCHRIFT

(11) **EP 0 896 008 B1**
(45) Veröffentlichungstag und Bekanntmachung des Hinweises auf die Patenterteilung: **28.02.2001**
(21) Anmeldenummer: 98107892.6
(22) Anmeldetag: 30.04.1998
(51) Int. Cl.: C08G 8/20, C08L 61/12, C09J 161/12

(54) **Bindemittelzusammensetzung, ihre Verwendung sowie ein Verfahren zur Herstellung von Spanplatten**
Binder composition, its use and process for the manufacture of chip boards
Composition de liant, son utilisation et procédé pour la fabrication de panneaux en particules de bois

(30) Priorität: 06.08.1997 DE 19733925
(43) Veröffentlichungstag der Anmeldung: 10.02.1999
(73) Patentinhaber: Bakelite AG, 58642 Iserlohn-Letmathe (DE)
(72) Erfinder: Roll, Willi, 48337 Altenberge (DE); Pizzi, Antonio, Prof., 88000 Chantraine, Epinal (FR); Stracke, Peter, 58642 Iserlohn (DE)

(56) Entgegenhaltungen:
- EP-A- 0 639 608
- EP-A- 0 648 807
- DE-A- 1 907 251
- DE-A- 4 402 341
- GB-A- 1 183 838

## Beschreibung

Die Erfindung betrifft eine Bindemittelzusammensetzung, die in der Hitze gehärtet werden kann, die mit Holz und anderen cellulosehaltigen Produkten verträglich ist und die zur Herstellung von Holzwerkstoffen, insbesondere von Spanplatten geeignet ist.

Im Zuge der Suche nach natürlichen und insbesondere nachwachsenden Rohstoffen für die Herstellung von Bindemitteln für Holzwerkstoffe ist auch die Verwendung von Tanninen bekannt.
So beschreibt EP-A 0 639 608 hitzehärtende Bindemittel auf Basis von Tanninen der Pecan-Nuß oder der Kiefernrinde und Hexamethylentetramin. Diese Bindemittel haben den Nachteil, daß ihre Festigkeit nach Wasserlagerung und dementsprechend auch die Dickenquellung nicht zufriedenstellend sind.

Bessere Ergebnisse bei diesen beiden Eigenschaften erhält man, wenn das Tannin mit Paraformaldehyd gehärtet wird. Die Härtung von Tanninen insbesondere von Tannin aus dem Rinden-Extrakt von Pinus brutia mit Paraformaldehyd zur Herstellung von Sperrholzverleimungen ist aus "Holz als Roh- und Werkstoff", Bd. 40 (1982), Seiten 13-18 bekannt.
Diese Härtung hat jedoch den Nachteil, daß die Formaldehydemission aus den gehärteten Holzwerkstoffen zu groß ist. Selbst durch Zugabe des Formaldehyd-Fängers Harnstoff in einer Menge, bei der die mechanischen Kennwerte noch beibehalten werden, zu deratigen Bindemitteln läßt sich die Formaldehyd-Emission nicht auf tolerierbare Werte unterhalb 1,5 mg/100g vermindern.

Es ist daher Aufgabe der Erfindung, eine Bindemittelzusammensetzung auf Basis von Tannin zur Herstellung von Holzwerkstoffen, insbesondere von Spanplatten bereitzustellen, die gegenüber der aus EP-A 0 639 608 bekannten Bindemittel verbesserte Werte bezüglich der Dickenquellung und der Naß-Querzugfestigkeit hat, bei denen die mit ihnen hergestellten Produkte eine wesentlich verminderte Formaldehyd-Emission haben.

Die Lösung der Aufgabe erfolgt durch eine Bindemittelzusammensetzung gemäß der Ansprüche 1-2, deren Verwendung zur Herstellung von cellulosehaltigen Dämmmaterialien und von Holzwerkstoffen, insbesondere von Spanplatten gemäß der Ansprüche 3 bis 5 sowie durch ein Verfahren zur Herstellung von Spanplatten gemäß Anspruch 6.

Es wurde gefunden, daß ein Holzwerkstoff, hergestellt mit einer Bindemittelzusammensetzung, die Tannin der Kiefernrinde und/oder Pecan-Nuß, Paraformaldehyd und ein Ammoniumsalz einer schwachen Säure enthält, nach Wasserlagerung eine verbesserte Dickenquellung und Querzugfestigkeit hat, verglichen mit einem analog hergestellten Holzwerkstoff,, der als Bindemittel Tannin der Kiefernrinde und/oder der Pecan-Nuß und Hexamethylentetramin enthält. Überraschenderweise aber zeigt ein derartiger, mit einer erfindungsgemäßen Bindemittelzusammensetzung hergestellter Holzwerkstoff eine sehr niedrige Formaldehydemission und erfüllt daher auch die Anforderungen, die bei einem Einsatz im Innenbereich gestellt werden.

Die erfindungsgemäße Bindemittelzusammensetzung enthält daher Tannin der Kiefernrinde (pinus radiata) und/oder der Pecan-Nuß, Paraformaldehyd und ein Ammoniumsalz einer schwachen Säure.
Diese Tannine aus der Gruppe der Procyanidine und der Prodelphinidine sind handelsübliche Produkte und werden bislang vorwiegend als Gerbmittel eingesetzt.. Die Handelsqualität ist für den erfindungsgemäßen Einsatz ausreichend.
Abmischungen dieser Tannine mit z.B. Mimosa- und/oder Quebracho-Tannin im Verhältnis 2:5 bis 5:2 haben zwar einer verlängerte Aushärtungszeit, lassen sich aber noch einsetzen.

Das Härtungsmittel in dieser Bindemittelzusammensetzung ist Paraformaldehyd in einer handelsüblichen Qualität.

Erfindungsgemäß wird die Reduzierung der Formaldehyd-Emission durch Zugabe eines Ammoniumsalzes einer schwachen Säure erzielt.
Schwache Säuren im Sinne dieser Erfindung sind anorganische und organische Säuren mit einem pK-Wert > 3.
Beispiele für entsprechende Ammoniumsalze sind Ammonium-borat, -acetat, -lactat, -benzoat, - adipat, Alkali- und Erdalkali-ammoniumphosphate, nicht jedoch Ammonium-carbonat oder- hydrogencarbonat.

Die erfindungsgemäßen Bindemittelzusammensetzungen enthalten die einzelnen Komponenten in den folgenden Mengenverhältnissen:

| | |
|---|---|
| Tannin | 70 - 93 Gew.% |
| Paraformaldehyd | 3 - 10 Gew.% |
| Ammoniumsalz | 4 - 20 Gew.% |

Diese Bindemittelzusammensetzungen eignen sich als Bindemittel zur Herstellung gebundener cellulosehaltiger Produkte wie z. B. von Holzwerkstoffen oder cellulosehaltigen Dämmmaterialien wie Textilvlies oder Schall- und Wärmedämmplatten, insbesondere aber zur Herstellung von Spanplatten.

Diese Herstellung von Spanplatten erfolgt in an sich bekannter Weise: Die trockenen Späne werden mit einer wäßrigen Lösung der erfindungsgemäßen Bindemittelzusammensetzung besprüht, unter Formgebung verpreßt und bei einem Druck im Bereich von 0,1 bis 4 MPa und einer Temperatur im Bereich von 140 - 230°C gehärtet.

### Beispiele:

Kiefernholzspäne werden mit jeweils einer 40 %igen Bindemittellösung besprüht. Sie enthalten dann jeweil 12 % Festharz.
Danach werden sie in an sich bekannter Weise (2,5N/mm²; 220°C) zu Platten der Dimension 500 x 500 x 20 mm geformt, gepreßt und gehärtet (13 s/mm). Bestimmt werden danach die Dichte, die Querzugfestigkeit der Platten a. trocken und b. nach Naßlagerung ( V 100 ) sowie die Dickenquellung nach 24-stündiger Lagerung in Wasser bei 20°C und die Formaldehydemission (bestimmt nach.ENRO, Perforatormethode)
Folgende Bindemiltelzusammensetzungen werden eingesetzt:

### Beispiel 1 (Vergleichsbeispiel):

| | |
|---|---|
| 90 Gew.% | Tannin der Kiefernrinde (pinus radiata) |
| 5 Gew.% | Harnstoff |
| 5 Gew.% | Paraformaldehyd |

### Beispiel 2 (Vergleichsbeispiel):

| | |
|---|---|
| 94 Gew.% | Tannin der Kiefernrinde (pinus radiata) |
| 6 Gew.% | Hexamethylentetramin |

### Beispiel 3:

| | |
|---|---|
| 81 Gew.% | Tannin der Kiefernrinde (pinus radiata) |
| 12 Gew.% | Ammoniumacetat |
| 7 Gew.% | Paraformaldehyd |

Die folgende Tabelle zeigt die erhaltenen Ergebnisse der 1-schichtigen Platten:

| | Beispiel 1 | Beispiel 2 | Beispiel 3 |
|---|---|---|---|
| Dichte [kg/m³] | 729 | 723 | 706 |
| Querzugfestigkeit [N/mm²] trocken | 0,73 | 0,61 | 0,55 |
| Querzugfestigkeit [N/mm²] nach Wasserlagerung | 0,13 | 0,10 | 0,12 |
| Dickenquellung [%] | 10,6 | 13,1 | 11,8 |
| Formaldehyd-Emission [mg/100g] | 4,4 | 1,3 | 1,3 |

## Patentansprüche

1. Hitzehärtende Bindemittelzusammensetzung enthaltend
70 - 93 Gew.% Tannin der Kiefernrinde und/oder der Pecan-Nuß oder Abmischungen von Tannin der Kiefernrinde und/oder der Pecan-Nuß mit Mimosa- und /oder Quebracho-Tannin
3 - 10 Gew.% Paraformaldehyd und
4 - 20 Gew.% eines Ammoniumsalzes einer Säure mit einem pK-Wert >3, mit Ausnahme von Ammoniumcarbonat und Ammoniumhydrogencarbonat.

2. Bindemittelzusammensetzung nach Anspruch 1, dadurch gekennzeichnet, daß das Ammoniumsalz Ammoniumacetat ist.

3. Verwendung einer Bindemittelzusammensetzung gemäß der Ansprüche 1-2 zur Herstellung von Holzwerkstoffen.

4. Verwendung einer Bindemittelzusammensetzung gemäß der Ansprüche 1-2 zur Herstellung von cellulosehaltigem Dämmmaterial.

5. Verwendung einer Bindemittelzusammensetzung gemäß der Ansprüche 1-2 zur Herstellung von Spanplatten.

6. Verfahren zur Herstellung von Spanplatten durch Besprühen der trockenen Späne mit einer wäßrigen Bindemittellösung und anschließende Formgebung, Verpressung und Härtung des Bindemittels bei erhöhter Temperatur, dadurch gekennzeichnet, daß als Bindemittel eine Zusammensetzung verwendet wird, die
70 - 93 Gew.% Tannin der Kiefernrinde und/oder der Pecan-Nuß oder Abmischungen von Tannin der Kiefernrinde und/oder der Pecan-Nuß mit Mimosa- und /oder Quebracho-Tannin
3 - 10 Gew.% Parafonnaldehyd und
4 - 20 Gew.% eines Ammoniumsalzes einer Säure mit einem pK-Wert >3, mit Ausnahme von Ammoniumcarbonat und Ammoniumhydrogencarbonat enthält.

## Claims

1. A heat curable binder composition containing
70 - 93 % by weight of tannin of the pine bark and/or of the pecan nut or mixtures of tannin of the pine bark and/or of the pecan nut with tannin of mimosa and/or quebracho
3 - 10 % by weight paraformaldehyde and
4 - 20 % by weight of an ammonium salt of an acid with an pK value >3, except ammonium carbonate and ammoniumhydrogen carbonate.

2. A binder composition according to claim 1, charakterized in that the ammonium salt is ammonium acetate.

3. Use of a binder composition according to claims 1 - 2 for the preparation of wood material.

4. Use of a binder composition according to claims 1 - 2 for the preparation of cellulose containing insulation material.

5. Use of a binder composition according to claims 1 - 2 for the preparation of chip boards.

6. A process for the preparation of chip boards by spraying the dry chips with an aqueous solution of a binder followed by forming, pressing and curing the binder at elevated temperature, characterized in that as binder a composition is used containing
70 - 93 % by weight of tannin of the pine bark and/or of the pecan nut or mixtures of tannin of the pine bark and/or of the pecan nut with tannin of mimosa and/or quebracho
3 - 10 % by weight paraformaldehyde and
4 - 20 % by weight of an ammonium salt of an acid with an pK value >3, except ammonium carbonate and ammoniumhydrogen carbonate.

## Revendications

1. Composition de liant thermodurcissable contennant
70 - 93 % en poids de tannine de l'écorce de pin et/ou de la noix pécan ou des mélanges de tannine de l'écorce de pin et/ou de la noix pecane avec tannine de mimosa et/ou de québraco
3 - 10 % en poids de paraformaldehyde
4 - 20 % en poids d'un sel d'ammonium d'une acide avec un valeur pK >3 à l'exception de carbonate et de hydogencarbonate d'ammonium.

2. Composition de liant selon la revendication 1, caractérisé en ce que le sel d'ammonium est acetate d'ammonium.

3. Utilisation d'une composition de liant selon les revendications 1 - 2 pour la fabrication de matériaux de bois.

4. Utilisation d'une composition de liant selon les revendications 1 - 2 pour la fabrication de matériaux cellulosiques isolantes.

5. Utilisation d'une composition de liant selon les revendications 1 - 2 pour la fabrication de panneaux en particules de bois.

6. Procédé pour la fabrication de panneaux en particules de bois par jaillir des paticules de bois sèches avec une solution aqueuse du liant et suivé par façonage, pressage et durcissage du liant à des temperatures élévées, caractérisé en ce que comme liant une composition est utilisée qui contient
70 - 93 % en poids de tannine de l'écorce de pin et/ou de la noix pécan ou des mélanges de tannine de l'écorce de pin et/ou de la noix pecane avec tannine de mimosa et/ou de québraco
3 - 10 % en poids de paraformaldehyde
4 - 20 % en poids d'un sel d'ammonium d'une acide avec un valeur pK >3 à l'exception de carbonate et de hydogencarbonate d'ammonium.
